# DEMANDE DE BREVET EUROPEEN

(11) **EP 4 429 084 A2**
(43) Date de publication de la demande: **11.09.2024**
(21) Numéro de dépôt: 24158023.2
(22) Date de dépôt: 16.02.2024
(51) Int. Cl.: H02K 9/06

(54) **MOTEUR ÉLECTRIQUE À RÉDUCTION DE BRUIT, NOTAMMENT POUR VÉHICULE FERROVIAIRE**

(30) Priorité: 17.02.2023 FR 2301484
(71) Demandeur: ALSTOM Holdings, 93400 Saint-Ouen-sur-Seine (FR)
(72) Inventeur: SOUGH, Mohamed-Laid, 25320 TORPES (FR); CHARNOZ, Hervé, 25330 SILLEY (FR)
(74) Mandataire: Lavoix

(57) **Abrégé**

Le moteur électrique (10) comportant un stator (16) et un rotor (12), un ventilateur (17) entraîné en rotation par le rotor (12), et un flasque (18) fixe définissant au moins une ouverture (24) d'entrée d'air. Des moyens (28) d'obturation sont mobiles entre une première position de dégagement de chaque ouverture (24) et une seconde position d'obturation de chaque ouverture (24). Des moyens (34) de rappel élastique rappellent les moyens d'obturation (28) vers la position de dégagement, les moyens d'obturation (28) étant entrainés vers la position d'obturation sous l'effet d'une force centrifuge induite par le rotor (12) en mouvement.

## Description

La présente invention concerne un moteur électrique, notamment pour un véhicule ferroviaire.

On connait déjà, dans l'état de la technique, un moteur électrique comportant un rotor et un stator. On connait notamment des moteurs ouverts, qui pour des raisons de refroidissement du moteur électrique, comportent un passage d'air défini entre le rotor et le stator, et un ventilateur porté par le rotor et entrainant l'air en circulation dans le passage d'air. On connait également des moteurs fermés, qui ne comportent pas une telle ventilation, le rotor étant enfermé pour éviter l'entrée d'élément polluant dans le moteur. Un moteur fermé est préférable pour une utilisation en environnement pollué, mais moins efficace thermiquement.

La présente invention a notamment pour but d'améliorer un tel moteur électrique, en proposant un moteur présentant des avantages d'un moteur ouvert et d'un moteur fermé, et également notamment en réduisant le bruit émis par ce moteur électrique à haute vitesse.

A cet effet, l'invention a notamment pour objet un moteur électrique, comportant un stator et un rotor mobile en rotation autour d'un axe de rotation, au moins un passage d'air étant défini entre le rotor et le stator, et comprenant un ventilateur entrainé en rotation par le rotor, et un flasque fixe définissant au moins une ouverture de passage d'air communiquant avec le passage d'air, caractérisé en ce que le moteur électrique comporte des moyens d'obturation de chaque ouverture de passage d'air, mobiles entre une première position de dégagement de chaque ouverture et une seconde position d'obturation de chaque ouverture, les moyens d'obturation étant configurés pour passer en position d'obturation lorsque le rotor présente une vitesse de rotation supérieure à un seuil prédéfini.

Les inventeurs ont constaté que le niveau de bruit à haut régime est principalement dû à la ventilation. La présente invention propose donc d'obturer l'ouverture de passage d'air pour empêcher le passage d'air dans la ventilation interne à haut régime.

De par l'utilisation du moteur de traction, cette réduction du flux d'air n'est pas dommageable à haut régime, car la densité de couple à cette vitesse est faible.

On notera que l'obturation de l'ouverture permet également d'assimiler le moteur à un moteur fermé à haut régime. En revanche, le moteur est assimilé à un moteur ouvert à bas régime ou à l'arrêt.

Un moteur électrique selon l'invention peut comporter en outre l'une ou plusieurs des caractéristiques suivantes, prises seules ou selon toutes combinaisons techniquement envisageables.
- Les moyens d'obturation comportent au moins un volet dimensionné pour recouvrir au moins l'une des ouvertures en position d'obturation.
- Chaque volet présente une forme s'étendant en arc de cercle défini autour de l'axe de rotation.
- Le moteur électrique comporte des moyens de rappel élastique des moyens d'obturation vers la position de dégagement, les moyens d'obturation étant entrainés vers la position d'obturation sous l'effet d'une force centrifuge induite par le rotor en mouvement.
- Les moyens de rappel élastique comportent, pour chaque volet, au moins un ressort, s'étendant radialement entre un moyeu lié au rotor et le volet correspondant.
- La raideur de chaque ressort est choisie pour que le volet correspondant recouvre le ou les ouvertures correspondantes lorsque la vitesse de rotation du rotor dépasse le seuil prédéfini.
- Le moteur électrique comporte des butées de fin de course limitant le déplacement des volets, chaque volet venant en contact avec l'une correspondante des butées dans la position d'obturation.
- La position d'obturation est définie par la longueur maximale des moyens de rappel élastiques.
- Le moteur électrique comporte un actionneur électrique muni de tiges radiales mobiles radialement, chaque tige portant un volet, l'actionneur électrique étant configuré pour déplacer les volets en fonction de la vitesse de rotation du rotor.
- Le seuil prédéfini est sensiblement égal à la moitié de la vitesse maximale du rotor.
- L'ouverture est une ouverture d'entrée d'air pour l'alimentation du rotor en air.
- L'ouverture est une ouverture de sortie d'air pour l'évacuation d'air depuis le rotor.

L'invention concerne également un véhicule ferroviaire, caractérisé en ce qu'il comporte un moteur électrique tel que défini précédemment.

Différents aspects et avantages de l'invention seront mis en lumière dans la description qui va suivre, donnée uniquement à titre d'exemple et faite en se référant aux figures annexées, parmi lesquelles :
[Fig 1] La figure 1 est une vue partielle en coupe longitudinale d'un moteur électrique selon un exemple de mode de réalisation de l'invention, dans une première configuration ;
[Fig 2] La figure 2 est une vue, dans un plan de coupe de la figure 1, du moteur électrique de la figure 1 ;
[Fig 3] La figure 3 est une vue similaire à la figure 1 du moteur électrique dans une seconde configuration ;
[Fig 4] La figure 4 est une vue similaire à la figure 2 du moteur de la figure 3 ;
[Fig 5] La figure 5 est une vue similaire à la figure 1 du moteur électrique dans une troisième configuration ;
[Fig 6] La figure 6 est une vue similaire à la figure 2 du moteur de la figure 5.
[Fig 7] La figure 7 est une vue en perspective partielle d'un moteur électrique selon un deuxième mode de réalisation de l'invention.

On a représenté, sur les figures, un moteur électrique 10, par exemple destiné à équiper un véhicule ferroviaire.

Le moteur électrique 10 comporte, de manière classique, un rotor 12 solidaire d'un arbre 14 mobile en rotation autour d'un axe longitudinal X. Le moteur électrique 10 comporte également de manière classique, un stator 16.

Le moteur électrique 10 comporte par ailleurs un ventilateur 17, relié cinématiquement au rotor 12 de manière à être entrainé en rotation par celui-ci.

Le ventilateur 17 est destiné à entrainer un flux d'air, notamment dans un premier passage d'air 20 circonférentiel défini entre le stator 16 et le rotor 12. De manière optionnelle, le rotor 12 comporte également au moins un second passage d'air 22.

Le moteur électrique 10 comporte un flasque 18 fixe. Le flasque 18 définit au moins une ouverture 24 de passage d'air communiquant avec le premier passage d'air 20 et chaque second passage d'air 22.

Dans l'exemple décrit, l'ouverture 24 est une ouverture d'entrée d'air, pour l'alimentation du rotor en air en vue de son refroidissement.

Dans l'exemple décrit, le flasque 18 définit une pluralité d'ouvertures 24 (notamment huit ouvertures 24). Ainsi, dans la suite de la description, l'au moins une ouverture 24 sera désignée par les termes « les ouvertures 24 ». Toutefois, le cas où le flasque 18 ne comporterait qu'une seule ouverture 24 n'est pas exclu.

On notera que le stator 16 comporte également avantageusement au moins un troisième passage d'air 26.

Il apparait qu'une partie du bruit généré par le moteur électrique 10 est due à l'air s'engouffrant par les ouvertures de passage d'air 24. Cette partie de bruit est prédominante à haut régime du moteur.

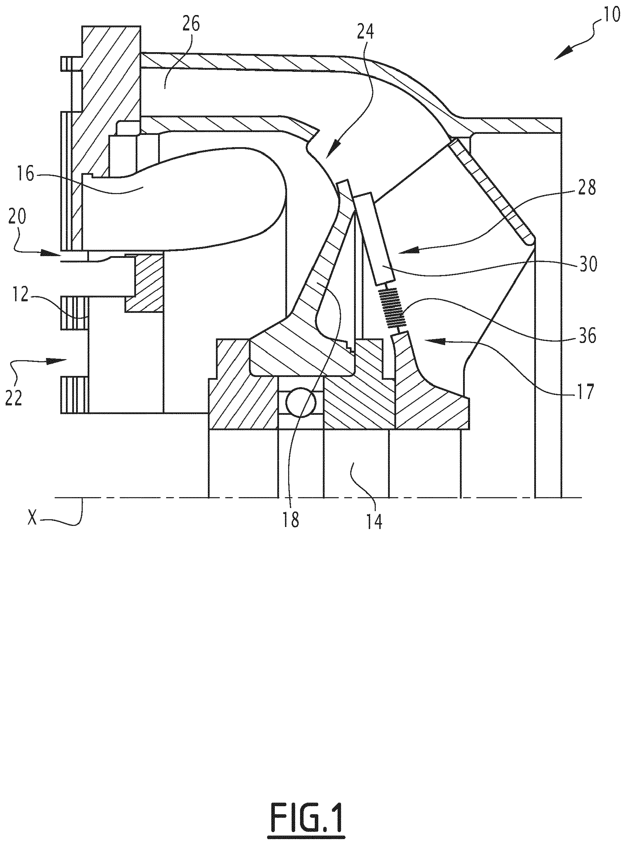

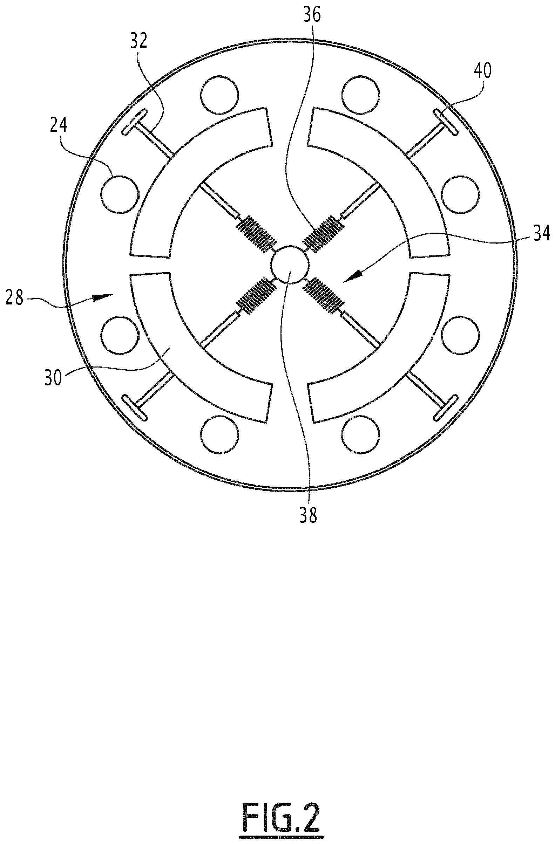

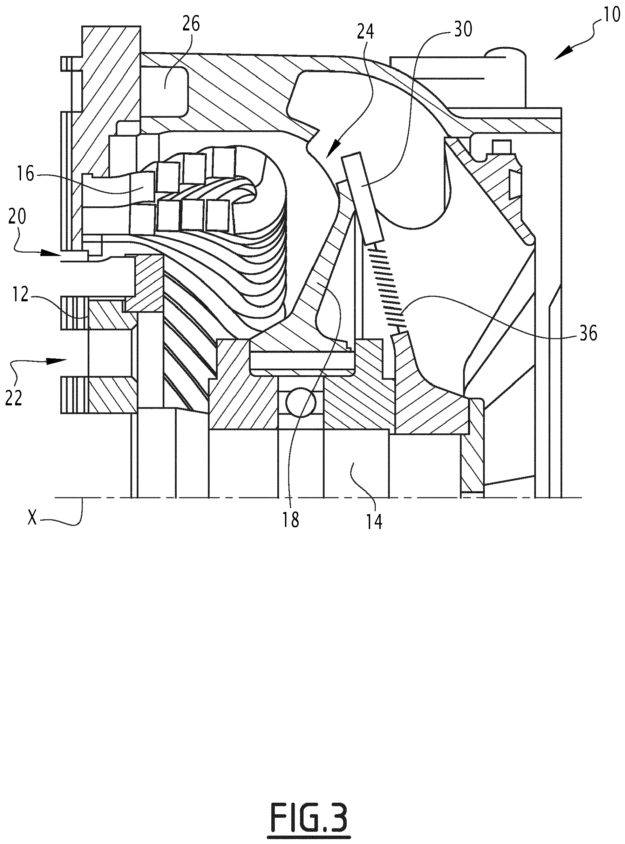

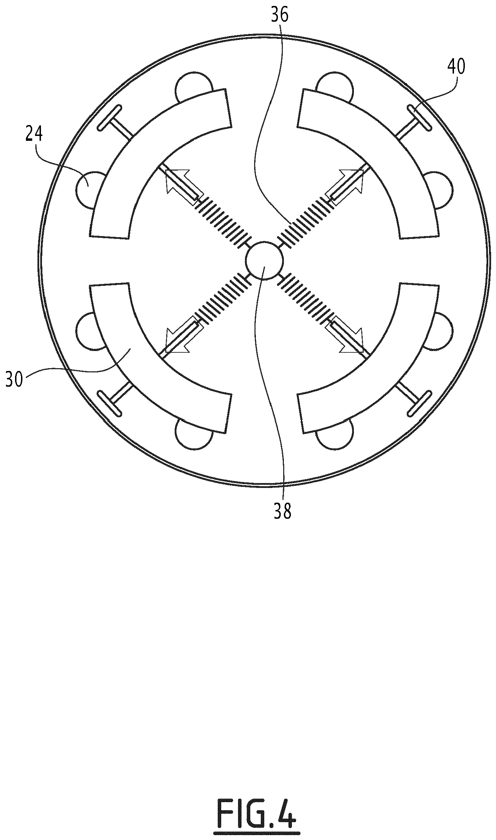

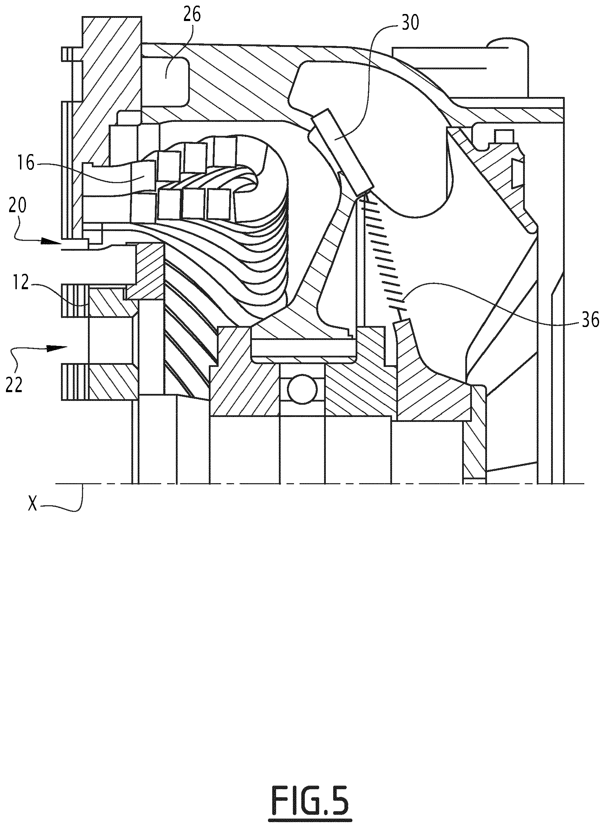

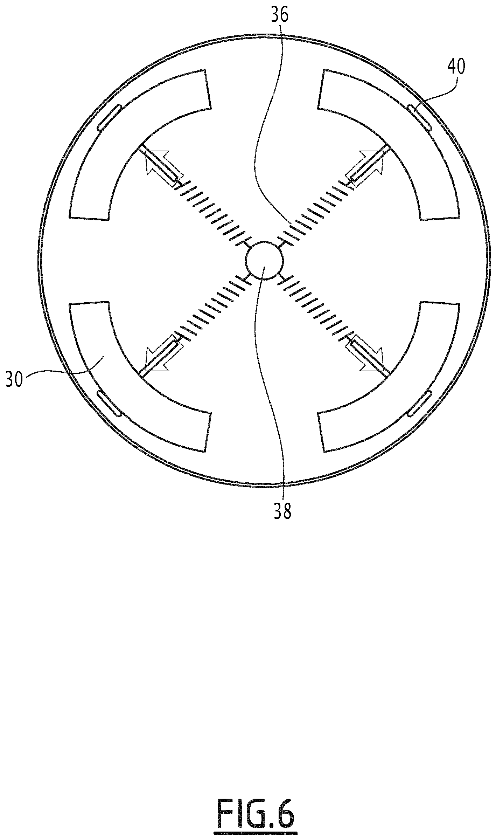

On a représenté, sur les figures 1 et 2, le moteur électrique 10 à l'arrêt, sur les figures 3 et 4, le moteur électrique à moyen régime, et sur les figures 5 et 6, le moteur électrique à haut régime.

Dans la présente description, on considère que le moteur électrique est à haut régime lorsque la vitesse de rotation du rotor 12 est supérieure à la moitié de sa vitesse maximale. Le moteur est à bas régime ou à moyen régime lorsque la vitesse de rotation du rotor 12 est inférieure à la moitié de sa vitesse maximale de rotation.

Afin de réduire le bruit lié à l'air s'engouffrant dans les ouvertures de passage d'air 24, le moteur électrique 10 comporte des moyens 28 d'obturation des ouvertures de passage d'air 24. Les moyens d'obturation 28 sont représentés plus en détail sur les figures 2, 4 et 6.

Les moyens d'obturation 28 comportent au moins un volet 30, mobile entre première position de dégagement des ouvertures 24, et une seconde position d'obturation d'au moins l'une des ouvertures 24.

Chaque volet 30 est dimensionné pour recouvrir au moins l'une des ouvertures 24 en position d'obturation.

Dans l'exemple décrit, les moyens d'obturation 28 comportent quatre volets 30, chacun étant dimensionné pour recouvrir deux ouvertures 24 en position d'obturation. Ainsi, dans la description qui va suivre, correspondant à un mode de réalisation particulier, les volets 30 seront désignés au pluriel, sans que cela n'exclue les modes de réalisation à un seul volet.

Chaque volet 30 présente par exemple une forme en arc de cercle défini autour de l'axe de rotation X. Chaque volet 30 présente une dimension, dans une direction radiale perpendiculaire à l'axe de rotation X, supérieure ou égale à la dimension, dans la même direction, de chaque ouverture 24 qu'il est destiné à recouvrir.

De manière optionnelle, le ventilateur 17 comporte des rails 32 de guidage des volets 30. Ces rails 32 permettent d'assurer le bon alignement des volets 30 lors de leurs déplacements entre les positions de dégagement et d'obturation. Les rails 32 s'étendent de préférence radialement depuis l'axe de rotation X.

Avantageusement, les rails 32 sont formés de matériaux à faible coefficient de friction, afin de ne pas opposer de résistance significative au déplacement des volets 30.

Les moyens d'obturation 28 comportent par ailleurs des moyens 34 de rappel élastique des volets 30 vers leur position de dégagement. Les moyens de rappel élastique 34 comportent par exemple un ressort 36 pour chaque volet 30. Chaque ressort 36 s'étend ainsi radialement depuis l'axe de rotation X, entre un moyeu 38 relié à l'arbre 14 et le volet 30 correspondant.

Les moyens d'obturation 28 sont entrainés vers la position d'obturation sous l'effet de la force centrifuge induite par l'arbre 14 en mouvement.

La raideur des ressorts 36 est choisie pour que la force centrifuge soit suffisamment importante par rapport à la force de rappel des ressorts pour que les volets 30 viennent recouvrir les ouvertures 24 correspondantes lorsque la vitesse de rotation de l'arbre 14 est supérieure à un seuil prédéterminé. Le seuil prédéterminé correspond par exemple à la moitié de la vitesse maximale du rotor 12. L'homme du métier saura aisément déterminer la raideur de ressort souhaitée à l'aide de calculs simple de forces.

On a représenté, sur les figures 3 et 4, une position intermédiaire des volets 30, lorsque le moteur fonctionne à moyen régime, avec une vitesse de rotation du rotor inférieure audit seuil. On remarque ainsi que les ouvertures 24 sont recouvertes progressivement en fonction de la force centrifuge, donc de la vitesse de rotation du rotor 12.

Lorsque la vitesse de rotation de l'arbre 14 est supérieure audit seuil prédéterminé, les volets 30, du fait de la force centrifuge, recouvrent totalement les ouvertures 24 comme cela est représenté sur les figures 5 et 6. Plus particulièrement, les volets 30 étant en rotation autour de l'axe de rotation X, les volets 30 sont dimensionnées pour que les ouvertures 24 soient obturés sensiblement à chaque instant par les volets 30 qui viennent les couvrir les uns après les autres.

Avantageusement, le moteur 10 comporte des butées de fin de course 40, contre lesquelles les volets 30 viennent en contact dans la position d'obturation, comme cela est représenté sur la figure 6. En variante, le déplacement des volets 30 est limité par la longueur maximale des ressorts 36.

Dans ce cas, l'air ne s'engouffre plus dans les ouvertures 24, supprimant ainsi le bruit lié à cet engouffrement d'air. Ceci permet, dans l'exemple représenté, une réduction de bruit d'environ 5 dB.

De par l'utilisation du moteur de traction, cela n'implique pas de problèmes de surchauffe du moteur. En effet, le moteur de traction, à haute vitesse, n'est pas sollicité thermiquement du fait de la faible densité de couple demandée à ce régime de fonctionnement et du fort niveau de ventilation.

Du fait de la force de rappel élastique, lorsque la vitesse de rotation de l'arbre 14 diminue, donc que la force centrifuge diminue, les volets 30 sont rappelés vers la position de dégagement, découvrant progressivement les ouvertures 24 en fonction de la vitesse.

Il apparait ainsi que les ouvertures 24 sont dégagées, obturées partiellement ou totalement obturées, de manière automatique, en fonction de la vitesse de rotation de l'arbre 14.

Ainsi, le moteur électrique 10 fonctionne comme un moteur ouvert à bas ou moyen régime (depuis une vitesse nulle jusqu'audit seuil prédéterminé, notamment jusqu'à une vitesse sensiblement égale à la moitié de la vitesse maximale), et comme un moteur fermé à haut régime (pour une vitesse supérieure audit seuil prédéfini, par exemple une vitesse supérieure à la moitié de la vitesse maximale).

On notera que le fonctionnement en moteur fermé permet également de réduire la pollution sur le rotor puisque l'air, porteur de pollution, ne circule plus autour du rotor lorsque les volets 30 sont en position fermée.

Il est à noter que l'invention n'est pas limitée au mode de réalisation précédemment décrit, mais pourrait présenter diverses variantes sans sortir du cadre des revendications.

En particulier, le mode de réalisation précédent décrit des moyens d'obturation pour des ouvertures d'entrée d'air, mais on pourrait également, en variante, prévoir des moyens d'obturation pour des ouvertures de sortie d'air. Le moteur pourrait alors comporter des moyens d'obturation pour les ouvertures d'entrée d'air, ou pour les ouvertures de sortie d'air, ou à la fois pour les ouvertures d'entrée d'air et les ouvertures de sortie d'air.

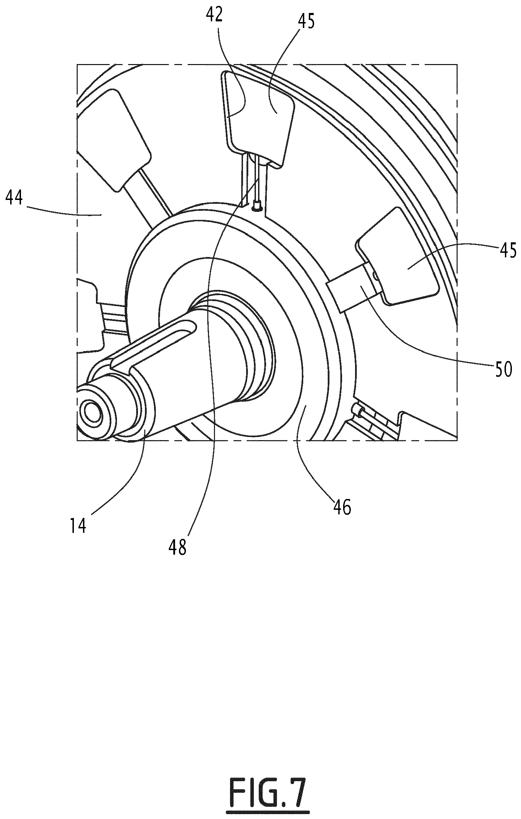

Sur le mode de réalisation de la Figure 7, les ouvertures de passage sont des ouvertures de sortie 42, ménagées dans un flasque 44 refermant le moteur 10 d'un côté aval opposé au côté d'entrée d'air.

Les ouvertures de sortie 42 sont chacune associée à un volet 45 mobile entre une position de dégagement (non représentée) et une position d'obturation (représentée sur la Figure 7).

Le moteur 10 comporte alors un actionneur électrique 46 destiné à manoeuvrer les volets 45 entre leurs positions de dégagement et d'obturation.

L'actionneur électrique 46 est muni de tiges radiales 48 mobiles radialement, chaque tige 48 portant un volet 45 respectif.

L'actionneur électrique 46 comporte de préférence un cache 50 pour chaque tige 48 (l'un des caches n'est pas représenté uniquement pour montrer la tige).

L'actionneur électrique 46 est configuré pour déplacer les volets 45 en fonction de la vitesse de rotation du rotor 12. Ainsi, l'actionneur électrique 46 est par exemple commandé par un dispositif d'automatisation décidant de la position des volets 45 en fonction de la vitesse du rotor 12.

L'actionneur électrique 46 est configuré pour que les volets 45 soient en position d'obturation lorsque la vitesse du rotor dépasse le seuil prédéfini.

## Revendications

1. Moteur électrique (10), comportant un stator (16) et un rotor (12) mobile en rotation autour d'un axe de rotation (X), au moins un passage d'air (20) étant défini entre le rotor (12) et le stator (16), et comprenant un ventilateur (17) entrainé en rotation par le rotor (12), et un flasque (18 ; 44) fixe définissant au moins une ouverture (24 ; 42) de passage d'air communiquant avec le passage d'air (20), **caractérisé en ce que** le moteur électrique (10) comporte des moyens (28) d'obturation de chaque ouverture de passage d'air (24 ; 42), mobiles entre une première position de dégagement de chaque ouverture (24) et une seconde position d'obturation de chaque ouverture (24), les moyens d'obturation (28) étant configurés pour passer en position d'obturation lorsque le rotor (12) présente une vitesse de rotation supérieure à un seuil prédéfini.

2. Moteur électrique (10) selon la revendication 1, dans lequel les moyens d'obturation (28) comportent au moins un volet (30 ; 45) dimensionné pour recouvrir au moins l'une des ouvertures (24 ; 42) en position d'obturation.

3. Moteur électrique (10) selon la revendication 2, dans lequel chaque volet (30 ; 45) présente une forme s'étendant en arc de cercle défini autour de l'axe de rotation (X).

4. Moteur électrique (10), selon la revendication 1, comportant des moyens (34) de rappel élastique des moyens d'obturation (28) vers la position de dégagement, les moyens d'obturation (28) étant entrainés vers la position d'obturation sous l'effet d'une force centrifuge induite par le rotor (12) en mouvement.

5. Moteur électrique (10) selon la revendication 4, dans lequel les moyens de rappel élastique (34) comportent, pour chaque volet (30), au moins un ressort (36), s'étendant radialement entre un moyeu (38) lié au rotor (12) et le volet (30) correspondant.

6. Moteur électrique (10) selon la revendication 5, dans lequel la raideur de chaque ressort (36) est choisie pour que le volet (30) correspondant recouvre le ou les ouvertures (24) correspondantes lorsque la vitesse de rotation du rotor (12) dépasse le seuil prédéfini.

7. Moteur électrique (10) selon l'une quelconque des revendications 4 à 6, comportant des butées de fin de course (40) limitant le déplacement des volets (30), chaque volet (30) venant en contact avec l'une correspondante des butées (40) dans la position d'obturation.

8. Moteur électrique (10) selon l'une quelconque des revendications 4 à 6, dans lequel la position d'obturation est définie par la longueur maximale des moyens de rappel élastiques.

9. Moteur électrique (10) selon l'une quelconque des revendications 2 à 3, comprenant un actionneur électrique (46) muni de tiges radiales (48) mobiles radialement, chaque tige (48) portant un volet (45), l'actionneur électrique (46) étant configuré pour déplacer les volets (45) en fonction de la vitesse de rotation du rotor (12).

10. Moteur électrique (10) selon l'une quelconque des revendications précédentes, dans lequel le seuil prédéfini est sensiblement égal à la moitié de la vitesse maximale du rotor (12).

11. Moteur électrique (10) selon l'une quelconque des revendications 1 à 10, dans lequel l'ouverture (24) est une ouverture d'entrée d'air pour l'alimentation du rotor (12) en air.

12. Moteur électrique (10) selon l'une quelconque des revendications 1 à 10, dans lequel l'ouverture (42) est une ouverture de sortie d'air pour l'évacuation d'air depuis le rotor (12).

13. Véhicule ferroviaire, **caractérisé en ce qu'**il comporte un moteur électrique selon l'une quelconque des revendications précédentes.
